# EUROPEAN PATENT SPECIFICATION

(11) **EP 2 260 713 B1**
(45) Date of publication and mention of the grant of the patent: **09.06.2021**
(21) Application number: 10009926.6
(22) Date of filing: 25.01.2005
(51) Int. Cl.: A22C 13/00, C08J 5/18, C08L 77/00, C08L 29/04

(54) **Smokeable polymeric casing**
Rauchbare polymere Hülle
Boîtier polymérique pouvant être fumé

(30) Priority: 28.01.2004 US 539958 P
(43) Date of publication of application: 15.12.2010
(62) Divisional of application: 05001395.2
(73) Proprietor: Viskase Companies, Inc., Willowbrook, IL 60527 (US)
(72) Inventor: McGarel, Owen J., Naperville, Illinois 60540 (US)
(74) Representative: Von Rohr Patentanwälte Partnerschaft mbB

(56) References cited:
- EP-A- 0 217 069
- EP-A1- 1 182 214
- WO-A-02/078455
- WO-A-03/020823
- DE-A1- 10 302 960
- US-A- 3 940 469
- CLARIANT GMBH: "Mowiol Polyvinyl Alcohol", INTERNET CITATION, 31 December 1999 (1999-12-31), pages 1-105, XP002632850, Retrieved from the Internet: URL:http://www2.cbm.uam.es/confocal/Manual es/mowiol.pdf [retrieved on 2011-04-13]

## Description

The present invention relates to thermoplastic films, particularly food casings suitable for the production of sausages, or other foodstuffs that can be processed inside a casing or film. These films exhibit a level of porosity that enable smoke components to pass through the film, thereby flavoring and/or coloring the encased foodstuff. This casing may be removed by high speed peelers, for example, or may remain on the encased foodstuff, as it also exhibits a high degree of oxygen barrier properties.

### BACKGROUND OF THE INVENTION

Historically, various foodstuffs such as sausages and cheeses have been produced in casing that were either natural, for example, as derived from animal intestines, or synthetic, such as those made from collagen or cellulose. The foodstuff is introduced into the casing and because of the permeability of these types of casing, the foodstuff, such as sausage meat, can be exposed to wood smoke, which imparts a flavor and/or color component to the sausage.

Because of problems and costs associated with these casings, there is a desire by sausage manufacturers for another type of synthetic casing based on polymers and in particular thermoplastics, and thermoplastics that are porous enough to be smokable. Although plastics are well known for the manufacture of sausages, smokable plastics pose unique problems in that generally plastics are known for their impermeability to air and liquids.

Currently, thermoplastic casings are primarily larger sized casings, and many remain on the meat product after processing because of their oxygen barrier properties. However, there is a demand for smaller diameter casings to produce hot dog-type sausages, and generally these types of casings must be able to be removed from the processed sausage, although some manufacturers may prefer to leave the casing on as an oxygen barrier.

Some thermoplastic casings are made from polyamides, having monolayer or multilayer structures containing a nylon layer. Casings comprising a blend of nylon with polyester are also known, as are multilayer casings of nylon with ethylene polymers or copolymers. These also may have a moisture content ranging from about 1 to 3 weight %. Multi-layer casings, such as those having an outer layer of nylon and an inner, or food contact layer, of an absorbent material such as a cellulosic film or a polymer with an open cell structure, are also known. What is still needed are plastic casings that may be produced at high speeds, that will be stiff enough to maintain their shape once stuffed with the foodstuff, that do not wrinkle during sausage production, and that are porous enough to allow smoke components to pass through to the encased food.

As discussed in U.S. Patent 4,303,711, single-layer, unstretched plastic casings consisting of higher homo-polyamides (polyamide 11 and polyamide 12) are known as well as plastic casings consisting of such polyamides coextruded in two layers with polyamide 6 as the outer layer. These polyamide casings may be easily made by the blown film technique, but typically suffer from a lack of dimensional stability and uniformity, being deformed upon stuffing so that production of stuffed sausages to a uniform diameter is difficult. The '711 patent further indicates that these unstretched films suffer from an undesirably wrinkled appearance after cooking and chilling. These casings are meant to be left on the finished sausage, and therefore a wrinkled appearance is a negative trait. Additionally, this casing is not meant to be porous, but rather to be impermeable to moisture and oxygen.

To overcome the defects or inadequate performance of seamless thermoplastic casings produced by blown film technology, plastic casings have been produced using stretch orientation.

Also, various attempts have been made at making stretch oriented polyamide casings. Uniaxially stretched casings which are only stretched in the longitudinal ("machine") direction ("MD") reportedly have the same disadvantages as unstretched casings regarding insufficient dimensional stability, nonuniformity of diameter and excessive wrinkling.

U.S. Patent 4,560,520 (Erk et al.) discloses forming multiaxially stretched, monolayer, polyamide, tubular films, e.g., of nylon 6 or nylon 66, which have elastic properties and which are said to be used for packaging table sausages and boiled sausages. The disclosed films are "fixed thermally" and shrunk after stretching, e.g., by subjecting the tube to controlled shrinkage of at least 15% and at most 40% at temperatures above 90 °C and also subjecting the film to infrared irradiation. This is to produce a nylon casing which does not have shrinkage at temperatures under 90 °C. This pre-shrunk casing is used for stuffing with meat emulsion and relies upon its elastic properties to provide wrinkle resistance. Again, this casing is meant to be left on the finished sausage, and to protect it from air and water while so encased. It is not permeable to any coloring or flavoring agents used on the outside of the encased sausage.

Additionally, orientation of seamless tubes of nylon by biaxial stretching is difficult. Extrusion and orientation of multilayer tubes, especially coextruded tubes, containing mixed layers of polyamides and other materials having different melting points, melt viscosities, and a different affinity for water can be very difficult. For example, U.S. Patent 4,892,765 (Hisazumi et al.) notes that although it is desirable to extrude films for packaging hams and sausages in tubular form, it is difficult to make a stretched tubular polyamide film of uniform thickness. Hisazumi et al. disclose production of a heat shrinkable multilayer film having a core layer of a polyvinylidene chloride copolymer attached to opposing polyamide layers (e.g., of nylon 6/66 copolymer) by opposing adhesive layers. This film is made using an orientation process which utilizes water to soften and plasticize the nylon to a degree sufficient to allow or facilitate orientation.

Generally, attempts at biaxially stretching nylon multilayer casing have used polyamide as the outer layer of the tube. The orientation processes employed for nylon multilayer casing have tended to involve complicated apparatus and processing such as that found in U.S. Patent 4,886,634.

This type of casing or film is not meant to be permeable to air or water, and therefore is of no use when producing sausages or food products treated with coloring or flavoring agents during the processing cycle.

A number of other thermoplastic casings that have a degree of permeability have been described in the literature.

In EP 0 139 888 (published May 8, 1985), linear aliphatic polyamides combined with other polymers such as an ionomer resin, modified ethylene vinyl acetate copolymers and/or modified polyolefins are taught for making smokable casings. Although under wet smoking conditions, taste and fragrance is transferred, these casings have low gas permeability and it is believed that they result in products that are more moist than generally acceptable, and cannot replace cellulose or other natural casings.

Other high barrier casings in respect to oxygen and vapor have been described. For example, coextrusion of polyvinylidene chloride copolymers ("PVDC") with polyamides or polyolefins have proven difficult because PVDC is very temperature and shear sensitive during extrusion. These copolymers are extrudable only over a narrow temperature range without causing degradation of the polymer in the extruder or die, which causes imperfections in the film. Polyamides require much higher temperatures for extrusion - generally about 200 °C or higher. At these higher extruder and die temperatures coextrusion of polyamide with PVDC is difficult and degradation of the PVDC may be expected, even if the PVDC layer is insulated from polyamide layers by intermediate layers. Resulting imperfections in the film may detrimentally affect the appearance, strength and barrier properties of the film and/or ease of orientation or biaxial stretching. In US 5,084,310 (Jan. 25, 1992), a mixture of PVDC and a low melting point polyamide is taught, producing a smokable polyamide. The resultant product allows the passage of a small amount of water vapor, but the smoked taste of the final product is much less than that of sausages made with conventional smoked cellulose casings.

WO 02/078455 A1, published Oct. 10, 2002, teaches a polymer film that is primarily polyamide with a hydrophilic compound, that forms a highly dispersed phase and is capable of mixing with at least 10 wt.% of water. Among the examples, two films are produced using two different polyvinyl alcohols as the hydrophilic component. One polyvinyl alcohol produced an acceptable film (i.e., smokable, good mechanical properties) while the other did not.

US 4,851,245 (Hisazumi et al.) teaches a smokable food-packing film comprising at least one layer of a mixture of polyamide and alpha-olefin vinyl alcohol copolymer. This film is claimed to have both gaseous permeability and oxygen barrier properties.

Document WO 03/020823 A1 relates to a method for producing polyvinyl alcohol shaped bodies involving thermoplastic processing of at least one specific polyvinyl alcohol named polymer (A) as defined therein, of at least one softener and, optionally, of water and/or other additives, wherein the method is characterized in that polymer (A) and the softener are placed into the extruder without being mixed beforehand and that the quantity of water is less than 2 wt.% with regard to polymer (A).

Document EP 0 217 069 A1 (relates to a smokable food-packaging film comprising at least one layer of a mixture of 45 to 90 wt.% polyamide, 10 to 55 wt.% copolymer of α-olefin and vinyl alcohol, and 50 to 30 wt.% polyolefin, said layer having a permeability to 50 % concentration of methanol of not less than 200 g/m² • day • atm at a temperature of 60 °C and a relative humidity of 0 % and an oxygen gas-permeability of not more than 50 cc/m² • day • atm at a temperature of 30 °C and a relative humidity of 60% and water vapor-transmission rate of not more than 70 g/m² • day at a temperature of 40 °C and a relative humidity of 90%.

Document DE 103 02 960 A1 relates to a smoke-permeable, damp-resistant, tubular, biaxially oriented, preferably also thermoset food envelope containing a mixture of at least one aliphatic (co)polyamide and at least one water-soluble synthetic polymer, and having a water vapor-permeability of between 40 and 200 g/m² • day, wherein the water-soluble polymer is preferably a polyvinyl alcohol and wherein, optionally, the mixture also contains additives which influence appearance, haptic characteristics, humidity storage capacity and peeling behavior. The envelope is preferably tubular and seamless and is produced by extrusion of a corresponding thermoplastic mixture. The envelope is preferably used as an artificial sausage skin, especially for sausages which can be smoked.

The Internet Citation according to the document "Mowiol® Polyvinyl Alcohol - Exactly your chemistry", 31 December 1999, pages 1-105 ("Sonderdruck"), Clariant GmbH, XP-002632850 (retrieved form the Internet: URL:http://www2.cbm.uam.es/confocal/Manuales/mowiol.pdf [retrieved on 2011-04-13]), lists and describes specific polyvinyl alcohols sold under the tradename "Mowiol® Polyvinyl Alcohol" by Clariant GmbH, Germany, including their properties and usages.

In summary, although several of the aforementioned plastic casing products have gained varying degrees of commercial acceptance in different market segments, their advantage compared to the traditional cellulosic casing has been chiefly one of cost with the problems of dimensional stability, uniformity of diameter, lack of permeability of smoke, and wrinkling being persistent concerns.

It is an objective of this invention to provide a thermoplastic casing or film that is permeable to smoke components during the processing of encased foodstuffs, i.e., sausages.

It is a further objective that the thermoplastic casing or film be extrudable and may be oriented by stretching in the transverse direction and/or the machine direction.

It is a further objective that the inventive casing or film may be made with biaxial orientation, single axis orientation or be left unoriented.

Another objective is that the inventive casing or film is readily removable from the encased, processed foodstuff.

And a further objective is that the inventive casing or film has the mechanical properties needed for commercial use, such as dimensional stability, uniformity of diameter, uniformity of the gauge of the film, and a smooth, non-wrinkled surface.

### SUMMARY OF THE INVENTION

Surprisingly, the above objectives and others may be achieved by a film as claimed according to any of claims 1 to 13. Especially, the above objectives may be achieved by the present invention, a novel shrinkable monolayer film that may be produced as a film or a tube, as in a food casing. This newly disclosed film is a blend of a polyamide base, a specific polyvinyl alcohol and optionally, an antiblocking agent. The film comprises from at least about 55 wt.% to about 85 wt.% of polyamide; from at least about 15 wt.% to about 45 wt.% of the specific polyvinyl alcohol; and optionally, from approximately 3 to about 5 weight % of antiblocking agent. The specific polyvinyl alcohol is described in the International Patent Application WO 03/020823, and known and available as the trade product Mowiflex® TC 232, produced by Kuraray Specialties Europe GmbH. The film of the present invention is permeable to smoke components wherein the smoke flavor and/or smoky color being transferred is detectable on the surface of the encased foodstuff.

The film, when extruded as a tube and made into a casing, remains dimensionally stable once stuffed with foodstuff and throughout the processing cycle. It is removable from the encased foodstuff by standard production methods.

Surprisingly, the present invention provides a relatively simple process and monolayer film which achieves a high degree of performance in providing a dimensionally stable film of uniform diameter which is suitable for shirring, stuffing, cooking, and smoking during the general manufacture of sausages such as frankfurters, and results in having an excellent cooking yield and a tight wrinkle-free appearance without requiring an after shrinking step. The casing also has approximately the same oxygen barrier properties as does casing made of 100% nylon.

Beneficially in one embodiment of the invention, the casing may be made by a continuous process in which a seamless tube is extruded through an annular die, cooled below the melting points of the components with water, biaxially stretch oriented, and annealed at an elevated temperature to dimensionally stabilize the seamless tubular film. This is a process well known to those skilled in the art.

### DETAILED DESCRIPTION

The inventive casing is particularly useful as small diameter casings, and even more particularly as tubular casings that are used for processing foodstuffs, such as sausages made of emulsified meat, and sausages made of coarsely ground meat, such as polish sausage, cotto salami, kielbasa, and bierwurst and also meat-substitute sausages, such as those made with processed beans or processed soybeans that are colored or flavored with the use of agents such as smoke during the processing cycle. It is also useful in casings such as larger bags or pouches used to surround whole muscle meat products, such as hams, beef, chickens or chicken parts, veal, and pork, which are then processed in the casings. Smoke is transferred through the permeable casing to the foodstuff surface to produce both a smoky color and a smoky flavor. For example, after processing sausages in these small diameter casings, encased links may be mechanically peeled off and the surface of the link is uniformly colored with a reddish-smoky color and/or a smoky flavor.

As the term is used herein, "casings" may be planar or tubular films, or may be in the form of pouches or bags. The casings may be wrapped around a foodstuff by any of the well known means in the art, which, depending on the casing material used and package type, may include, e.g., twisting the casing, heat sealing to produce a fusion bond, pressure sealing (with or without heat) to produce a peelable seal, clipping, and sealing with an adhesive.

The manufacture of such casings is well known in the art and one of ordinary skill is aware of a variety of methods of production, such as extrusion as a tube through an annular die or through a flat-slit die to obtain a flat sheet. This flat sheet may be backseamed to produce a casing, while the tube may be slit to form a sheet, which may then be backseamed.

While attempting to invent a commercially acceptable thermoplastic casing that is highly permeable to smoke and that may be manufactured by extrusion technology, the applicant tested a number of polyvinyl alcohol ("PVA") products with various polyamides, with no success. Problems encountered included the inability to extrude the resin blends at all, limited ability to extrude the blends due to the development of black specks and smoke in the extruder, development of a large number of gels in the film, and problems with producing and using the biorientation bubble. The basic problem appeared because of the PVA's used. A breakthrough was made when a specific, newly developed polyvinyl alcohol polymer resin was used. This polyvinyl alcohol polymeric resin product is known and commercially available as Mowiflex® TC 232, (registered trademark of Kurary Specialties Europe GmbH) produced by Kuraray Specialties Europe GmbH, and is described and claimed in the International Patent Application No. WO 03/020823, The description of the polymer is the following:

Said polyvinyl alcohol polymer resin comprises (i.e. is based on) a polymer (A), said polymer (A) comprising:
(a) from 25.0 to 99.9 wt.%, preferably 40.0 to 99.9 wt.%, more preferably 50.0 to 99.9 wt.%, based on said polymer (A), of structural units corresponding to formula (1) 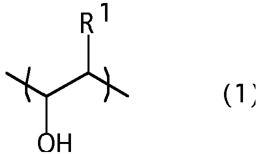 wherein R¹ denotes hydrogen or methyl, preferably hydrogen;
(b) from 0.1 to 50.0 wt.%, based on said polymer (A), of structural units corresponding to formula (2) 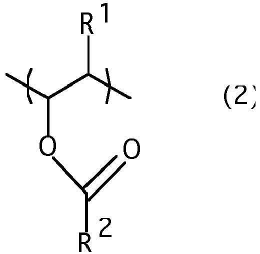 wherein R² denotes an alkyl rest having from 1 to 6 carbon atoms, especially methyl or ethyl, preferably methyl;
(c) from 0.0 to 50.0 wt.%, based on said polymer (A), of structural units corresponding to formula (3) 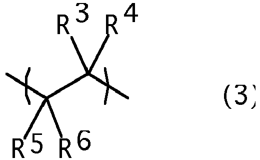 wherein R³, R⁴, R⁵ and R⁶, independently from each other, denote organic rests (i.e. organic substituents) having a molecular weight in the range of from 1 to 500 g/mole [For example, said organic rests R³, R⁴, R⁵ and R⁶ of formula (3), independently from each other, may denote a hydrogen atom or a branched or linear, aliphatic or cycloaliphatic rest having from 1 to 16 carbon atoms, said branched or linear, aliphatic or cycloaliphatic rest optionally comprising at least one group selected from carboxylic acid groups, carboxylic acid anhydride groups, carboxylic acid ester groups, carboxylic acid amide groups and/or sulfonic acid groups, or said organic rests R³, R⁴, R⁵ and R⁶ of formula (3), independently from each other, may be derived from olefins having from 2 to 18 carbon atoms, (meth)acrylic acids, maleic acid, maleic anhydride, fumaric acid, itaconic acid, (meth)acrylamides, ethylene sulfonic acid and/or acrylamidopropylene sulfonic acid (AMPS)];
   wherein the total number of structural units of formula (2) is from 0.1 to 50 mol-% based on the total number of structural units of formulae (1) and (2) and wherein the total number of structural units of formula (3) is from 0.1 to 20 mol-% based on the total number of structural units of formulae (1), (2) and (3).

For further details with respect to the composition of the polyvinyl alcohol polymer resin, reference is made to the International Patent Application No. WO 03/020823. Thus, according to the present invention, the polyvinyl alcohol component is selected such that the starting resin blend for forming said film (i.e. the blend comprising said polyvinyl alcohol resin, said polyamide and, optionally, said antiblocking agent) is extrudable so that extruded films may be processed therefrom.

According to a preferred embodiment of the present invention, said polyvinyl alcohol resin is a thermoplastic polyvinyl alcohol resin. Preferably, said polyvinyl alcohol resin, based on said polyvinyl alcohol resin, comprises less than 2 wt.% of water (determined according DIN 51777, method of Karl-Fischer). A preferred polyvinyl alcohol resin has a hydrolysis degree in the range of from 70 to 100 Mol-%. It is also preferred if said polyvinyl alcohol resin has a viscosity, based on a solution of 4 wt.% in water (20 °C, DIN 53015), in the range of from 2 to 70 mPas, especially 2 to 40 mPas, preferably 3 to 30 mPas, more preferably 3 to 15 mPas. Especially, the used polyvinyl alcohol resin comprises volatile components and/or volatile impurities in maximum amounts of less than 2 wt.%, especially less than 1.5 wt.%, preferably less than 1 wt.%, based on said polyvinyl alcohol resin. Furthermore, it is also preferred if the used polyvinyl alcohol resin comprises a maximum methanol content of less than 2 wt.%, especially less than 1.5 wt.%, preferably less than 1 wt.%, based on said polyvinyl alcohol resin. A particularly preferred polyvinyl alcohol resin has a melt flow index (190 °C, 21.6 kg) in the range of from 10 to 60 g/10 min, especially 20 to 50 g/10min, preferably 30 to 50 g/10 min.

Polyhydric alcohols (synonymously sometimes also named as "polyhydroxyls" or "polyfunctional alcohols") as well as derivatives thereof, polyethylene glycols, glycerol, diols and triols, as well as mixtures thereof are used as the plasticizers in the resin of the polymer vinyl alcohol (i.e. Mowiflex® TC 232). In addition, the polyvinyl alcohol may comprise at least one further additive, especially selected from the group consisting of slip additives, antioxidants, pigments, dyes, fillers and polymeric compounds as well as mixtures thereof.

This newly invented film is a blend of a polyamide base and a specific polyvinyl alcohol resin (i.e. Mowiflex® TC 232) and optionally, an antiblocking agent. The film comprises preferably from at least about 55 weight % ("wt.%") to about 85 wt. % of polyamide and from at least about 15 wt.% to about 45 wt.% of the polyvinyl alcohol (i.e. Mowiflex® TC 232); more preferably from at least about 65 wt.% to about 85 wt.% of polyamide and from at least about 15 wt.% to about 35 wt.% of the polyvinyl alcohol (i.e. Mowiflex® TC 232); and most preferably from at least about 75 wt.% to about 85 wt.% of polyamide and from at least about 15 wt.% to about 25 wt.% of the polyvinyl alcohol (i.e. Mowiflex® TC 232); and in all the above preferences, there may optionally be from approximately 3 to about 5 wt. % of antiblocking agent.

Polyamides are polymers having recurring amide (-CONH-) linking units in the molecular chain. Polyamides include nylon resins which are well known polymers having a multitude of uses including utility as packaging films, bags and casing. In particular, the novel thermoplastic films of the present invention are useful in food packaging. "Nylon" is a generic term for synthetic, high molecular weight (Mₙ =10,000) linear polyamides. Suitable nylons are commercially available and may be prepared by well known methods. Suitable nylon polymers may be homopolymers or copolymers such as bipolymers and terpolymers, and blends and modifications thereof.

Suitable nylons for use in the present invention are believed to include nylon 6, nylon 66, nylon 6,12, nylon 6/12 copolymer, and nylon 6/6,6 copolymer. Preferred polyamides are aliphatic nylons such as nylon 6, and copolymers thereof and especially preferred are aliphatic nylon copolymers such as nylon 6/6,6, which exhibits highly desirable properties of meat adhesion as well as oxygen impermeability, mechanical strength properties and ease of stretch orientation. Other nylons exhibiting similar properties would also be suitable for use in the present invention.

An optional component of the casing is a group of chemicals known as antiblocking agents. Blocking is the adherence of film surfaces to each other as during the blown film process or when roll stock or film coated surfaces are stacked and subjected to pressure and heat. This adherence problem can be controlled with the use of antiblock concentrates such as diatomaceous earth, precipitated silica, amorphous silica, fatty amides, calcium carbonate, and ceramic spheres. The antiblock concentrate used in the examples herein was barium sulfate, sold by Polyone Corporation, Avon Lake, Ohio, USA under the name Wilson 5018 FT-72 antiblock.

Although the composition of the film is as described above, it may additionally contain other components, such as dyes and plasticizers, as are well-known to those skilled in the art.

The inventive film may be made using a method for biaxially orienting thermoplastic films, in which a primary tube is formed by melt extruding a tube from an annular die. The primary tube can be made by any of the known techniques for extrusion of tubular plastic film. This extruded tube is cooled, collapsed, and then inflated between first and second means for blocking the interior of the tube which means are set apart from one another to form an isolated fluidic mass or bubble, and the inflated tube is advanced through a heating zone to bring the tube to its draw temperature. In a draw or orientation zone the tubing is radially expanded in the transverse direction ("TD") and pulled or stretched in the machine direction ("MD") at a temperature such that expansion occurs in both directions (preferably simultaneously) - the expansion of the tubing being accompanied by a sharp, sudden reduction of thickness at the draw point. The term heating zone is used to define a region which includes both a zone of preliminary heating of the primary tubing to the draw temperature and also the draw or orientation zone.

In the present invention the tubing may be biaxially stretched by passing the tubing through a heating zone and rapidly radially extending the tubing when the tubing is at the draw temperature. The extended tubing is contacted with a stream of cooling fluid, while extended in the heating zone and the temperature of the cooling fluid at least at one point within the heating zone, is substantially below the temperature to which the tubing has been heated during its flow through the heating zone up to said at least at one point within said heating zone. The temperature of the cooling fluid in the draw zone is at least 10 °F (5 °C) below that of the tubing at the draw point. Preferably the cooling fluid is air, and a stream of high velocity air is blown in a generally upward direction, toward the radially extended portion of the tubing.

Alternatively, film of the present invention may be made by sheet extrusion or lamination with orientation, e.g., by tentering. Tubes may be made from sheets of film by seaming using, e.g., adhesives. In this manner various diameter tubes may be made from sheet film and tubular film may be slit and resized by seaming.

A preferred process of the present invention is a continuous process for making a tubular, biaxially stretched, heat shrinkable thermoplastic food casing. This process may comprise:
(a) extruding a melt plasticized monolayer thermoplastic tube having an exterior surface and an interior surface through an annular die;
(b) cooling the coextruded tube below the melting point of the casing by applying water to the exterior surface of the tube;
(c) transferring the cooled tube to an orientation zone wherein the tube is reheated to a temperature below the melting point of the tube layer with the lowest melting point, followed by cooling while a fluid mass is admitted to the interior of the tube as said tube is passed between first and second means for blocking fluid flow along the interior of the tube, thereby causing the tube to stretch circumferentially about the entrapped fluid mass and simultaneous with the circumferential stretching, the tube is stretched in a direction perpendicular thereto to produce a biaxially stretched tubular film; and
(d) annealing the biaxially stretched film at elevated temperature to dimensionally stabilize the film.
Such process per se is well known to the skilled practitioner.

### EXAMPLES

The following are examples and comparative examples given to illustrate the present invention.

In all the following examples, unless otherwise indicated herein, the film compositions were produced generally utilizing the apparatus and method described in U.S. Pat. No. 3,456,044 (Pahlke), which describes the double bubble method and in further accordance with the detailed description above. All percentages are by weight unless indicated otherwise.

The casings of Examples 1 to 3 were produced using the following materials and under the following conditions. The nylon 6 homopolymer is from UBE Industries, Ltd. The Mowiol® 8-88, 18-88, and Mowiflex® TC 232 PVAs are from Kuraray Specialties Europe GmbH. The antiblock concentrate, Wilson 5018 FT-72 antiblock, was purchased from Polyone Corporation.

The resin or resin mixture was fed from a hopper into an attached single screw extruder where the resin was heat plasticized and extruded through a monolayer spiral die into a primary tube. The extrusion temperatures ranged from about 218 to 229 °C. Die temperatures were set at about 218 to about 232 °C. The monolayer primary tube was cooled with water at a temperature of 5 °C. A primary tube with a diameter of about 15.0 mm was flattened by passage through a pair of nip rollers.

The primary tube was then reheated by immersion into hot water at 68 °C and biaxially stretched by a factor of from 2.2 to 2.6 in the longitudinal or machine direction and 3.30 to 3.5 in the transverse direction using a trapped bubble with an airtight seal. The oriented film was annealed at a temperature with infra-red heaters allowing the film to relax from 10 to 15% in flat width and longitudinal directions.

The following test methods are referred to in this application and examples.

Experimental results of the following examples are based on tests similar to the following test methods unless noted otherwise:
Tensile Strength: ASTM D-882, method A
% Elongation: ASTM D-882, method A
Oxygen Gas Transmission Rate (O₂GTR): ASTM D-3985-81
Water Vapor Transmission Rate (MVTR): ASTM D-3985-81
Gauge: ASTM D-2103

Shrinkage Values: Shrinkage values are defined to be values obtained by measuring unrestrained shrink at 90 °C. for 10 seconds. Four test specimens are cut from a given sample of the film to be tested. The specimens are cut into squares of 10 cm length in the machine direction by 10 cm. length in the transverse direction. Each specimen is completely immersed for 10 seconds in a 90 °C. water bath. The specimen is then removed from the water bath and the distance between the ends of the shrunken specimen is measured for both the MD and TD directions. The difference in the measured distance for the shrunken specimen and the original 10 cm side is multiplied by 10 to obtain the percent of shrinkage for the specimen in each direction. The shrinkage for the four specimens is averaged for the MD shrinkage value of the given film sample, and the shrinkage for the four specimens is averaged for the TD shrinkage value.

L, a, b Test: Hunter L, a, b values are standard color scale values which indicate differences in brightness, hue and saturation using a standard color system which relates lightness as L values, and hue and croma as a combination of a and b values on a coordinate scale where a represents redness-greenness and b represents yellowness-blueness. L values describe the degree of darkness, where a value of 100 equals white and that of 0 equals black. a-values describe the degree of redness, which increases with an increasing a-value. b-values describe the degree of yellowness, which increases with increasing b-value. Hunter L, a, b and color scale values and opacity may be measured by the following tests.

Encased or peeled frankfurters may be tested as is. L, a, b values and opacity are measured using a colorimeter such as a Hunter D25-PC2Δ colorimeter available from Hunter Associate Laboratory, Inc. of Reston, Virginia, U.S.A. or the Color Machine Model 8900 available from Pacific Scientific.

Samples are placed on the sample plane of the colorimeter (which is calibrated using standard tiles according to the manufacturer's instructions) where a 45° incident light from a quartz-halogen lamp (clear bulb) illuminates the sample. An optical sensor placed at 0° (perpendicular to the sample plane) measures the reflected light which is filtered to closely approximate CIE 2° Standard Observer for Illuminant C. Values are reported using a standard Hunter L, a, b color scale.

Frankfurters are held directly against the port opening, typically a circular opening about 0.5 inches in diameter. The aperture should be no larger than the area to be sampled. The frankfurter is placed with the axis of the longitudinal direction (machine direction) perpendicular to the path of the incident light travelling to the sample from the quartz-halogen lamp light source. It is generally positioned so that exterior surface of the frankfurter is adjacent to the sample port. Alignment of the casing sample is checked to avoid obvious defects and L, a, b values are measured. The measuring is repeated to obtain a set of values, which are then averaged.

Five measurements per frankfurter were made and two frankfurters were tested.

The invention will become clearer when considered together with the following examples which are set forth as being merely illustrative of the invention and which are not intended, in any manner, to be limitative thereof. Unless otherwise indicated, all parts and percentages throughout the specification are by weight.

### EXAMPLE 1 - COMPARATIVE

Comparative casings were made using 1) Mowiol® 18-88, having a viscosity of about 18 (DIN 53015) mPas, and a hydrolysis or saponification in mol% of about 88, a nylon 6 homopolymer, and the antiblock agent, 2) 100% nylon 6 homopolymer, and 3) 100% nylon 6/6,6 copolymer. Table 1 gives the physical properties of these casings.
Sample 1 control casings were made with 100% nylon 6, and Sample 2 control casing with 100% nylon 6/6,6.
Sample 3 contained 5 wt.% of Mowiol® 18-88, 92 wt.% of nylon 6, and 3 wt. % of the antiblock.
Sample 4 contained 10 wt.% of Mowiol® 18-88, 87 wt.% of nylon 6, and 3 wt.% of the antiblock.
Sample 5 was made from 15 wt.% of Mowiol® 18-88, 82 wt.% of nylon 6 and 3 wt.% of the antiblock.

These PVC, polyamide and antiblock were mixed and loaded into an extruder and melted. Extruder temperatures ranged from 440 to 455 °F (227 to 235 °C). Die temperatures ranged from 440 to 450 °F (227 to 232 °C). The melt was extruded through an annular die and the primary tube was formed. The primary tube was reheated by spraying with water at 68 °C and stretched biaxially with air-blowing - the double bubble process. The longitudinal stretch was 2.5 and the lateral stretch was about 3.3 to 3.5. The casing was then flattened and a third bubble formed by the introduction of air between two nips. The bubble was reheated via infra-red heaters and the overall flat width reduced from about 10 to about 15%.

During processing of the film, problems were encountered. Although films containing 5 wt.% and 10 wt.% of Mowiol® 18-88 were easily extruded, the film containing 15 wt.% of the PVA were not able to be extruded in a acceptable manner. It was also attempted to produce a film containing 20 wt. % of the PVA, but this could not be extruded.

As the percent of the PVA increased, an improvement of the water vapor transmission rate was seen. When normalized for the differences in gauge, the MVTR increased from about 46 g /100 in²/24 hours/mil to about 63 g / 100 in²/24 hours/mil.

**Table 1**

| Films Produced with Mowiol® 18-88 and Compared to Nylon Control Casings | | | | | |
|---|---|---|---|---|---|
| | Sample 1 | Sample 2 | Sample 3 | Sample 4 | Sample 5 |
| | | | | | |
| % 18-88 | 0 | 0 | 5 | 10 | 15 |
| Gauge Average (mils) | 1.04 | 0.94 | 0.86 | 0.95 | 1.15 |
| MD Tensile Strength at Break (psi) | 41020 | | 33090 | 34440 | 36110 |
| MD Elongation at Break (%) | 159 | | 143 | 163 | 119 |
| TD Tensile Strength at Break (psi) | 39940 | | 47480 | 42640 | 30410 |
| TD Elongation at Break (%) | 112 | | 75 | 88 | 114 |
| MD Shrinkage at 90° C | 19 | 29 | 24 | 21 | 24 |
| TD Shrinkage at 90° C | 18 | 30 | 22 | 21 | 17 |
| O₂ Transmission (cc/100/24hrs/mil) | 1.4 | 1.8 | 1.7 | 1.7 | 1.5 |
| MVTR at 38°C (g/100in²/24hrs/mil) | 38.7 | 33.04 | 46.9 | 52.7 | 63.1 |

### EXAMPLE 2 - COMPARATIVE.

Comparative casings were made with another PVA, Mowiol® 8-88, (the viscosity is approximately 8 and the hydrolysis of about 88 mol%), blended with nylon 6/6,6 and 3 wt. % of the antiblock concentrate. The process to make these casings were similar to the method outlined in Example 1, except that the PVA and the polyamide was mixed in the extruder hopper, instead of prior to being placed in the hopper. The formulations contained 12.5 wt.%, 15 wt.% and 30 wt. % of the PVA, with the remainder being the antiblock concentrate and the nylon 6/6,6. The 12.5 wt. % resin mixture was able to be run on the extruder, while the 15 and 30 wt. % caused considerable black buildup on the die, thereby making it impossible to extrude an acceptable film.

### EXAMPLE 3 - INVENTIVE FILM

The inventive film was made using the inventive PVA, Mowiflex® TC 232. Included in the blend was nylon 6/6,6 and 3 wt. % of the antiblock concentrate. A control of 100% nylon 6/6,6 was also run.
Sample 6 was the nylon 6/6,6 control.
Sample 7 had the formula of 15 wt.% of TC 232, 87 wt.% nylon 6/6,6, and 3 wt. % of the antiblock concentrate.
Samples 8, 9 and 11 contained 25 wt.% of TC 232, 72 wt. % of nylon 6/6,6, and 3 wt.% of the antiblock concentrate.
Sample 10 contained 35 wt. % of TC 232, 62 wt. % of nylon 6/6,6 and 3 wt. % of the antiblock concentrate.

Mixtures comprising TC 232, nylon 6/6,6, and 3 wt. % of the antiblock concentrate were loaded into an extruder and melted. Extruder temperatures ranged from 400 to 425° F (182 to 218 °C). The die temperature was 425 °F (218 °C). The melt was extruded through an annular die and primary tube formed. The primary tube was then reheated by spraying with water at 68 °C and stretched biaxially with air-blowing (double bubble process). The longitudinal stretch was 2.2 and the lateral stretch was about 3.3 to 3.5. The casing was flattened and a third bubble formed by the introduction of air between two nips. The bubble was annealed using infra-red heaters and the overall flat width reduced from approximately 10 to 15%.

These films were extruded and processed without difficulty, and their physical properties are described in Table 2.

As seen in Table 2, the MVTR of these films are significantly increased over those of the films of Table 1. The MVTR of the samples was measured at a temperature of 77 °C, a temperature at which many sausages are processed, and resulted in values above 600g /100in² /24 hours/ mil. At the same temperature, it would be expected that the MVTR of the 100% nylon sample would be less than 400 g/100in²/24 hours/mil. These transmission rates are significantly greater that the transmission rates seen in Samples 1-5.

It was also found that although the MVTR increased dramatically with the use of higher concentrations of TC 232, the O₂ transmission rates remained substantially similar to that seen in the 100% nylon control sample.

**Table 2**

| Physical Properties of TC 232 Containing Films | | | | | | |
|---|---|---|---|---|---|---|
| | Sample Nos. | | | | | |
| | Sample 6 | Sample 7 | Sample 8 | Sample 9 | Sample 10 | Sample 11 |
| | | | | | | |
| % TC 232 | 0 | 15 | 25 | 25 | 35 | 25 |
| Gauge Average (mil) | 0.94 | 0.98 | 0.85 | 0.96 | 1.08 | 0.67 |
| MD Tensile Strength at Break (psi) | | 379170 | 32590 | 34750 | 33430 | 31790 |
| MD Elongation at Break (%) | | 212 | 174 | 198 | 199 | 176 |
| TD Tensile Strength at Break (psi) | | 40260 | 31930 | 37860 | 33600 | 41840 |
| TD Elongation at Break (%) | | 77 | 69 | 64 | 81 | 85 |
| MD Shrinkage at 90° C | 29 | 20 | 23 | 20 | 18 | 20 |
| TD Shrinkage at 90° C | 30 | 24 | 26 | 25 | 22 | 26 |
| O₂ Transmission (cc/100² /24hrs/mil) | | 1.56 | 1.2 | 1.35 | 1.235 | 0.7 |
| MVTR at 77°C (g/100²/24hrs/mil) | Expecte d <400 | 832.8 | 907.2 | 905.85 | 1265.4 | 731.5 |
| Flat width | 82 - 84 | 77 - 80 | 74 - 75 | 74-77 | 66 - 69 | 84 - 86 |

### EXAMPLE 4 - SMOKE TRANSFERENCE

Samples 1, 5, 6, 7, 9, and 10 were stuffed with all meat bologna emulsions by hand and formed into individual links. The links of sausages were processed as they would be in a commercial manufacturer's factory, using heat, humidity, and cook cycle times consistent with processing a meat emulsion product. During the processing cycle, the stuffed links were exposed to gaseous smoke. Once the links were finished cooking, the casing was then mechanically slit and the released links were examined for L, a, b values.

The results of the L, a, b tests are shown in Table 3.

**Table 3**

| Various TC 232 SMOKABLE Nylon Color Data | | | | | | | | |
|---|---|---|---|---|---|---|---|---|
| | | | **L-Value** | | **a-Value** | | **b-Value** | |
| **Sample** | **Size - Flat Width** | **Description** | **Avg.** | **SD** | **Avg.** | **SD** | **Avg.** | **SD** |
| | | | | | | | | |
| 1 | | 100% nylon 6 | 53.5 | 0.66 | 14.04 | 0.54 | 13.81 | 0.29 |
| 5 | | 15% 18-88 | 47.52 | 0.71 | 13.96 | 0.65 | 16.33 | 0.26 |
| 6 | 83 mm | Nylon 6/6,6 | 52.53 | 0.99 | 13.33 | 0.82 | 13.55 | 0.45 |
| 7 | 76 mm | 15% TC 232 | 47.87 | 1.03 | 14.74 | 0.45 | 15.70 | 0.32 |
| 9 | 77 mm | 25% TC 232 | 46.42 | 1.53 | 15.21 | 0.79 | 16.01 | 0.48 |
| 10 | 66 mm | 35% TC 232 | 43.44 | 0.83 | 14.89 | 0.38 | 16.40 | 0.37 |

As shown in Table 3, all of the sausages processed in the TC 232-containing casings developed significant color. Generally, 2 - 3 L units can be detected by the human eye. Even the film containing the lowest amount of T232, 15%, produced links with a decrease of 4.66 L units (the lower the number, the darker the color) as compared to the sausages encased in 100% nylon casings. The meat processed in casing that contained 35% TC 232 developed the most color, as shown by having 9.09 more L units of color than did the meat processed in the nylon control film.

### EXAMPLE 5 - SINGLE BUBBLE METHOD

A mixture comprising 35% TC232 and 65% of nylon 6/6,6 copolyamide was loaded into an extruder and melted. The extruder zones were set at a temperature of between 410 to 430° F (192 °C to 221 °C). The two inch die was set a temperatures of 423 to 425 °F (217 °C to 218 °C). A bubble was formed around air as the melt was extruded upwards and the melt cooled by the means of an air ring. The final caliber of the film was approximately 1.37 mils.

This method produced films having extremely high MVTR values, thereby indicating that these films would be highly smokable. The casing had positive shrinkage, however, indicating that it most likely would wrinkle after being cooked and chilled. While this is generally not desired, a wrinkled appearance is acceptable in several chub applications particularly for product with a D shape.

Further modifications of the invention disclosed will be apparent to those skilled in the art without departing from the scope of the invention as defined by the appended claims.

## Claims

1. A seamless tubular, smokable, biaxially stretched, heat shrinkable film which may be used for food packaging, said film comprising:
(i) at least one polyvinyl alcohol resin in amounts of from 15 wt.% to 45 wt.% based on the weight of said film;
(ii) at least one aliphatic polyamide in amounts of from 55 wt.% to 85 wt.% based on the weight of said film; and
(iii) optionally, at least one antiblock agent, especially in amounts of from 3 wt.% to 5 wt.% based on the weight of said film;
said at least one polyvinyl alcohol resin comprising a polymer (A), said polymer (A) comprising:
(a) from 25.0 to 99.9 wt.%, based on said polymer (A), of structural units corresponding to formula (1) 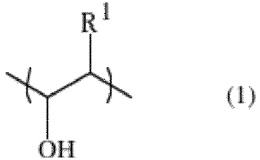 wherein R¹ denotes hydrogen or methyl, preferably hydrogen;
(b) from 0.1 to 50.0 wt.%, based on said polymer (A), of structural units corresponding to formula (2) 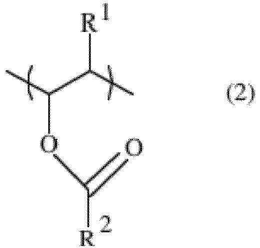 wherein R² denotes an alkyl rest having from 1 to 6 carbon atoms, especially methyl or ethyl, preferably methyl;
(c) from 0.0 to 50.0 wt.%, based on said polymer (A), of structural units corresponding to formula (3) 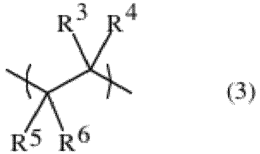 wherein R³, R⁴, R⁵ and R⁶, independently from each other, denote organic rests having a molecular weight in the range of from 1 to 500 g/mole;
wherein the total number of structural units of formula (2) is from 0.1 to 50 mol-% based on the total number of structural units of formulae (1) and (2) and wherein the total number of structural units of formula (3) is from 0.1 to 20 mol-% based on the total number of structural units of formulae (1), (2) and (3).

2. A film according to claim 1,
wherein said polyvinyl alcohol resin, based on said polyvinyl alcohol resin, comprises less than 2 wt.% of water (determined according DIN 51777, method of Karl-Fischer) and/or wherein said polyvinyl alcohol resin is a thermoplastic polyvinyl alcohol resin.

3. A film according to claim 1 or 2,
wherein said polyvinyl alcohol resin has a hydrolysis degree in the range of from 70 to 100 Mol-% and/or wherein said polyvinyl alcohol resin has a viscosity, based on a solution of 4 wt.% in water (20 °C, DIN 53015), in the range of from 2 to 70 mPas, especially 2 to 40 mPas, preferably 3 to 30 mPas, more preferably 3 to 15 mPas.

4. A film according to any of claims 1 to 3,
wherein said polyvinyl alcohol resin comprises volatile components and/or volatile impurities in maximum amounts of less than 2 wt.%, especially less than 1.5 wt.%, preferably less than 1 wt.%, based on said polyvinyl alcohol resin.

5. A film according to any of claims 1 to 4,
wherein said polyvinyl alcohol resin comprises a maximum methanol content of less than 2 wt.%, especially less than 1.5 wt.%, preferably less than 1 wt.%, based on said polyvinyl alcohol resin.

6. A film according to any of claims 1 to 5,
wherein said polyvinyl alcohol resin has a melt flow index (190 °C, 21.6 kg) in the range of from 10 to 60 g/10 min, especially 20 to 50 g/10min, preferably 30 to 50 g/10 min.

7. A film according to any of claims 1 to 6,
wherein said polyvinyl alcohol resin also comprises at least one plasticizer, especially wherein said plasticizer is selected from the group consisting of polyhydric alcohols (polyhydroxyls, polyfunctional alcohols), polyethylene glycols, glycerol, diols and triols as well as mixtures thereof.

8. A film according to any of claims 1 to 7,
wherein said polyvinyl alcohol comprises at least one further additive, especially selected from the group consisting of slip additives, antioxidants, pigments, dyes, fillers and polymeric compounds as well as mixtures thereof.

9. A film according to any of claims 1 to 8,
wherein said organic rests R³, R⁴, R⁵ and R⁶ of formula (3), independently from each other, denote a hydrogen atom or a branched or linear, aliphatic or cycloaliphatic rest having from 1 to 16 carbon atoms, said branched or linear, aliphatic or cycloaliphatic rest optionally comprising at least one group selected from carboxylic acid groups, carboxylic acid anhydride groups, carboxylic acid ester groups, carboxylic acid amide groups and/or sulfonic acid groups, and/or wherein said organic rests R³, R⁴, R⁵ and R⁶ of formula (3), independently from each other, are derived from olefins having from 2 to 18 carbon atoms, (meth)acrylic acids, maleic acid, maleic anhydride, fumaric acid, itaconic acid, (meth)acrylamides, ethylene sulfonic acid and/or acrylamidopropylene sulfonic acid (AMPS).

10. A film according to any of claims 1 to 9,
wherein the polyvinyl alcohol comprises from 15 wt.% to 35 wt.% and the aliphatic polyamide from 65 wt.% to 85 wt.%.

11. A film according to any of claims 1 to 10,
wherein the polyvinyl alcohol comprises from 15 wt.% to 25 wt.% and the aliphatic polyamide from 75 wt.% to 85 wt.%.

12. A film according to any of claims 1 to 11,
wherein the aliphatic polyamide is selected from the group consisting of nylon 6, nylon 66, nylon 6,12, nylon 6/12 copolymer, and nylon 6/6,6 copolymer.

13. A film according to any of claims 1 to 12,
wherein the antiblock agent is selected from the group consisting of barium sulfate, diatomaceous earth, silica, calcium carbonate, fatty amides and ceramic spheres.

## Patentansprüche

1. Nahtlose, schlauchförmige, rauchbare (räucherbare), biaxial gestreckte, wärmeschrumpfbare Folie (Film), welche für Lebensmittelverpackungen verwendet werden kann, wobei die Folie umfasst:
(i) mindestens ein Polyvinylalkoholharz in Mengen von 15 Gew.-% bis 45 Gew.-%, bezogen auf das Gewicht der Folie;
(ii) mindestens ein aliphatisches Polyamid in Mengen von 55 Gew.-% bis 85 Gew.-%, bezogen auf das Gewicht der Folie; und
(iii) gegebenenfalls mindestens ein Antiblockmittel, insbesondere in Mengen von 3 Gew.-% bis 5 Gew.-%, bezogen auf das Gewicht der Folie;
wobei das mindestens eine Polyvinylalkoholharz ein Polymer (A) umfasst, wobei das Polymer (A) umfasst:
(a) 25,0 bis 99,9 Gew.-%, bezogen auf das Polymer (A), an Struktureinheiten der Formel (1) 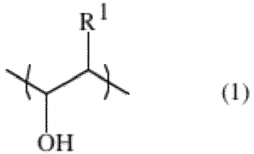 worin R¹ Wasserstoff oder Methyl, vorzugsweise Wasserstoff, bedeutet;
(b) 0,1 bis 50,0 Gew.-%, bezogen auf das Polymer (A), an Struktureinheiten der Formel (2) 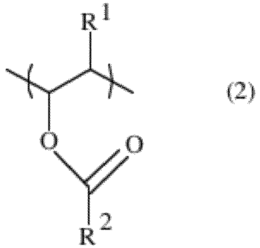 worin R² einen Alkylrest mit 1 bis 6 C-Atomen, insbesondere Methyl oder Ethyl, vorzugsweise Methyl, bedeutet;
(c) 0,0 bis 50,0 Gew.-%, bezogen auf das Polymer (A), an Struktureinheiten der Formel (3) 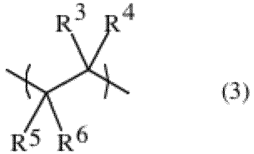 worin R³, R⁴, R⁵ und R⁶ unabhängig voneinander für organische Reste mit einem Molekulargewicht im Bereich von 1 bis 500 g/Mol stehen;
wobei die Gesamtzahl der Struktureinheiten der Formel (2) von 0,1 bis 50 Mol-%, bezogen auf die Gesamtzahl der Struktureinheiten der Formeln (1) und (2), beträgt und wobei die Gesamtzahl der Struktureinheiten der Formel (3) von 0,1 bis 20 Mol-%, bezogen auf die Gesamtzahl der Struktureinheiten der Formeln (1), (2) und (3), beträgt.

2. Folie nach Anspruch 1,
wobei das Polyvinylalkoholharz, bezogen auf das Polyvinylalkoholharz, weniger als 2 Gew.-% Wasser (bestimmt nach DIN 51777, Karl-Fischer-Methode) enthält und/oder wobei das Polyvinylalkoholharz ein thermoplastisches Polyvinylalkoholharz ist.

3. Eine Folie nach Anspruch 1 oder 2,
wobei das Polyvinylalkoholharz einen Hydrolysegrad im Bereich von 70 bis 100 Mol-% aufweist und/oder wobei das Polyvinylalkoholharz eine Viskosität, bezogen auf eine Lösung von 4 Gew.-% in Wasser (20 °C, DIN 53015), im Bereich von 2 bis 70 mPas, insbesondere 2 bis 40 mPas, vorzugsweise 3 bis 30 mPas, besonders bevorzugt 3 bis 15 mPas, aufweist.

4. Folie nach einem der Ansprüche 1 bis 3,
wobei das Polyvinylalkoholharz flüchtige Komponenten und/oder flüchtige Verunreinigungen in maximalen Mengen von weniger als 2 Gew.-%, insbesondere weniger als 1,5 Gew.-%, vorzugsweise weniger als 1 Gew.-%, bezogen auf das Polyvinylalkoholharz, umfasst.

5. Folie nach einem der Ansprüche 1 bis 4,
wobei das Polyvinylalkoholharz einen maximalen Methanolgehalt von weniger als 2 Gew.-%, insbesondere weniger als 1,5 Gew.-%, vorzugsweise weniger als 1 Gew.-%, bezogen auf das Polyvinylalkoholharz, aufweist.

6. Folie nach einem der Ansprüche 1 bis 5,
wobei das Polyvinylalkoholharz einen Schmelzflussindex (190 °C, 2,16 kg) im Bereich von 10 bis 60 g / 10 min, insbesondere 20 bis 50 g / 10 min, vorzugsweise 30 bis 50 g / 10 min, aufweist.

7. Folie nach einem der Ansprüche 1 bis 6,
wobei das Polyvinylalkoholharz auch mindestens einen Weichmacher enthält, insbesondere wobei der Weichmacher ausgewählt ist aus der Gruppe von mehrwertigen Alkoholen (Polyhydroxylen, polyfunktionellen Alkohole), Polyethylenglykolen, Glycerin, Diolen und Triolen sowie deren Mischungen.

8. Folie nach einem der Ansprüche 1 bis 7,
wobei der Polyvinylalkohol mindestens einen weiteren Zusatzstoff, insbesondere ausgewählt aus der Gruppe von Gleitmittelzusätzen, Antioxidantien, Pigmenten, Farbstoffen, Füllstoffen und polymeren Verbindungen sowie deren Mischungen, enthält.

9. Folie nach einem der Ansprüche 1 bis 8,
wobei die organischen Reste R³, R⁴, R⁵ und R⁶ der Formel (3), unabhängig voneinander, ein Wasserstoffatom oder einen verzweigten oder linearen, aliphatischen oder cycloaliphatischen Rest mit 1 bis 16 Kohlenstoffatomen bezeichnen, wobei der verzweigte oder lineare, aliphatische oder cycloaliphatische Rest gegebenenfalls mindestens eine Gruppe, ausgewählt aus Carbonsäuregruppen, Carbonsäureanhydridgruppen, Carbonsäureestergruppen, Carbonsäureamidgruppen und/oder Sulfonsäuregruppen, ist, und/oder wobei die organischen Reste R³, R⁴, R⁵ und R⁶ der Formel (3), unabhängig voneinander, von Olefinen mit 2 bis 18 Kohlenstoffatomen, (Meth-)Acrylsäuren, Maleinsäure, Maleinsäureanhydrid, Fumarsäure, Itaconsäure, (Meth-)Acrylamiden, Ethylensulfonsäure und/oder Acrylamidopropylensulfonsäure (AMPS) abgeleitet sind.

10. Folie nach einem der Ansprüche 1 bis 9,
wobei der Polyvinylalkohol 15 Gew.-% bis 35 Gew.-% und das aliphatische Polyamid 65 Gew.-% bis 85 Gew.-% umfasst.

11. Folie nach einem der Ansprüche 1 bis 10,
wobei der Polyvinylalkohol 15 Gew.-% bis 25 Gew.-% und das aliphatische Polyamid 75 Gew.-% bis 85 Gew.-% umfasst.

12. Folie nach einem der Ansprüche 1 bis 11,
wobei das aliphatische Polyamid ausgewählt ist aus der Gruppe von Nylon 6, Nylon 66, Nylon 6,12, Nylon 6/12-Copolymer und Nylon 6/6,6-Copolymer.

13. Folie nach einem der Ansprüche 1 bis 12,
wobei das Antiblockmittel ausgewählt ist aus der Gruppe bestehend aus Bariumsulfat, Diatomeenerde, Siliciumdioxid, Calciumcarbonat, Fettamiden und Keramikkugeln.

## Revendications

1. Film sans soudure et thermorétractable, tubulaire, fumable et étiré biaxialement, lequel peut être utilisé pour l'emballage alimentaire, ledit film comprenant:
(i) au moins une résine d'alcool polyvinylique en quantités de 15 % en poids à 45 % en poids par rapport au poids dudit film;
(ii) au moins un polyamide aliphatique en quantités de 55 % en poids à 85 % en poids par rapport au poids dudit film; et
(iii) éventuellement, au moins un agent antiblocage, notamment en quantités de 3 % en poids à 5 % en poids par rapport au poids dudit film;
ladite au moins une résine d'alcool polyvinylique comprenant un polymère (A), ledit polymère (A) comprenant:
(a) de 25,0 à 99,9 % en poids, par rapport audit polymère (A), d'unités structurelles correspondant à la formule (1) 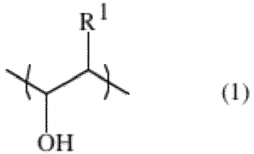 dans laquelle R¹ représente un hydrogène ou un méthyle, de préférence un hydrogène;
(b) de 0,1 à 50,0 % en poids, par rapport audit polymère (A), d'unités structurelles correspondant à la formule (2) 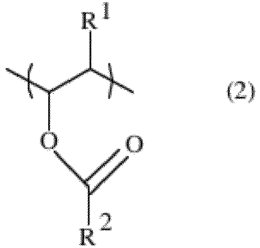 dans laquelle R² représente un reste alkyle ayant de 1 à 6 atomes de carbone, notamment méthyle ou éthyle, de préférence méthyle;
(c) de 0,0 à 50,0 % en poids, par rapport audit polymère (A), d'unités structurelles correspondant à la formule (3) 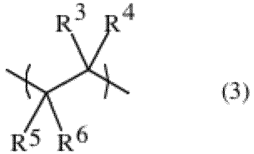 dans laquelle R³, R⁴, R⁵ et R⁶, indépendamment les uns des autres, représentent des restes organiques ayant un poids moléculaire dans la gamme de 1 à 500 g/mole;
où le nombre total d'unités structurelles de formule (2) est de 0,1 à 50 % en moles par rapport au nombre total d'unités structurelles de formules (1) et (2) et où le nombre total d'unités structurelles de formule (3) est de 0,1 à 20 % en moles par rapport au nombre total d'unités structurelles de formules (1), (2) et (3).

2. Film selon la revendication 1,
dans lequel ladite résine d'alcool polyvinylique, basée sur ladite résine d'alcool polyvinylique, comprend moins de 2 % en poids d'eau (déterminé selon la norme DIN 51777, méthode de Karl-Fischer) et/ou dans lequel ladite résine d'alcool polyvinylique est une résine d'alcool polyvinylique thermoplastique.

3. Film selon la revendication 1 ou 2,
dans lequel ladite résine d'alcool polyvinylique a un degré d'hydrolyse dans la gamme de 70 à 100 % en moles et/ou dans lequel ladite résine d'alcool polyvinylique a une viscosité, basée sur une solution de 4 % en poids dans l'eau (20 °C, DIN 53015), dans la gamme de 2 à 70 mPas, particulièrement de 2 à 40 mPas, de préférence de 3 à 30 mPas, plus préférablement de 3 à 15 mPas.

4. Film selon l'une quelconque des revendications 1 à 3,
dans lequel ladite résine d'alcool polyvinylique comprend des composants volatils et/ou des impuretés volatiles en quantités maximales inférieures à 2 % en poids, en particulier inférieures à 1,5 % en poids, de préférence inférieures à 1 % en poids, par rapport à ladite résine d'alcool polyvinylique.

5. Film selon l'une quelconque des revendications 1 à 4,
dans lequel ladite résine d'alcool polyvinylique comprend une teneur maximale en méthanol inférieure à 2 % en poids, notamment inférieure à 1,5 % en poids, de préférence inférieure à 1 % en poids, par rapport à ladite résine d'alcool polyvinylique.

6. Film selon l'une quelconque des revendications 1 à 5,
dans lequel ladite résine d'alcool polyvinylique a un indice de fluidité (190 °C, 2,16 kg) dans la gamme de 10 à 60 g / 10 min, en particulier de 20 à 50 g / 10 min, de préférence de 30 à 50 g / 10 min.

7. Film selon l'une quelconque des revendications 1 à 6,
dans lequel ladite résine d'alcool polyvinylique comprend également au moins un plastifiant, en particulier où ledit plastifiant est choisi dans le groupe constitué par les alcools polyhydriques (polyhydroxyles, alcools polyfonctionnels), les polyéthylèneglycols, le glycérol, les diols et les triols ainsi que leurs mélanges.

8. Film selon l'une quelconque des revendications 1 à 7,
dans lequel ledit alcool polyvinylique comprend au moins un autre additif, particulièrement choisi dans le groupe constitué par les additifs de glissement, les antioxydants, les pigments, les colorants, les charges et les composés polymères ainsi que leurs mélanges.

9. Film selon l'une quelconque des revendications 1 à 8,
dans lequel lesdits restes organiques R³, R⁴, R⁵ et R⁶ de la formule (3), indépendamment les uns des autres, désignent un atome d'hydrogène ou un reste aliphatique ou cycloaliphatique, ramifié ou linéaire, ayant de 1 à 16 atomes de carbone, ledit reste aliphatique ou cycloaliphatique, ramifié ou linéaire, comprenant éventuellement au moins un groupe choisi parmi les groupes acide carboxylique, les groupes anhydride d'acide carboxylique, les groupes ester d'acide carboxylique, les groupes amide d'acide carboxylique et/ou les groupes acide sulfonique, et/ou dans lequel lesdits restes organiques R³, R⁴, R⁵ et R⁶ de formule (3), indépendamment les uns des autres, sont dérivés d'oléfines ayant de 2 à 18 atomes de carbone, d'acides (méth)acryliques, d'acide maléique, d'anhydride maléique, d'acide fumarique, d'acide itaconique, de (méth)acrylamides, d'acide éthylène sulfonique et/ou d'acide acryl-amidopropylène sulfonique (AMPS).

10. Film selon l'une quelconque des revendications 1 à 9,
dans lequel l'alcool polyvinylique comprend de 15 % en poids à 35 % en poids et le polyamide aliphatique de 65 % en poids à 85 % en poids.

11. Film selon l'une quelconque des revendications 1 à 10,
dans lequel l'alcool polyvinylique comprend de 15 % en poids à 25 % en poids et le polyamide aliphatique de 75 % en poids à 85 % en poids.

12. Film selon l'une quelconque des revendications 1 à 11,
dans lequel le polyamide aliphatique est choisi dans le groupe constitué par le nylon 6, le nylon 66, le nylon 6,12, le copolymère de nylon 6/12 et le copolymère de nylon 6/6,6.

13. Film selon l'une quelconque des revendications 1 à 12,
dans lequel l'agent antiblocage est choisi dans le groupe constitué par le sulfate de baryum, la terre de diatomées, la silice, le carbonate de calcium, les amides gras et les sphères céramiques.
